# EUROPEAN PATENT APPLICATION

(11) **EP 3 715 967 A1**
(43) Date of publication of application: **30.09.2020**
(21) Application number: 19165068.8
(22) Date of filing: 26.03.2019
(51) Int. Cl.: G05B 19/042, G05B 19/4097

(54) **METHOD OF GENERATING NUMERICAL CONTROL CODES FOR A MACHINE TOOL**

(71) Applicant: Sandvik Machining Solutions AB, 811 81 Sandviken (SE)
(72) Inventor: BRANDT, Daniel, 393 65 Kalmar (SE)
(74) Representative: Sandvik

(57) **Abstract**

The present invention relates to a computer implemented method (600) for generating numerical control codes for a controller (111) of a machine tool (110) configured to manufacture an object via subtractive manufacturing, the method comprising obtaining (610) machining information (MI), obtaining (620) controller information (CI), generating (630), based on the obtained controller information, post-processing means (170) configured to process machining information into numerical control codes (NC) executable by said controller, and processing (640) the obtained machining information (MI), using said post processing means (170), into numerical control codes (NC), which when executed by the controller causes the machine tool (110) to perform machining represented by the obtained machining information (MI) and thereby manufacture the object via subtractive manufacturing.

## Description

### TECHNICAL FIELD

The present disclosure generally relates to machining and in particular to generating numerical control codes for subtractive manufacturing.

### BACKGROUND

Computer-aided design (CAD) models or three dimensional, 3D, models are often employed to define objects to be manufactured. The manufacturing may be performed via machining operations performed by one or more machine tools, such as computer numerical control (CNC) machine tools A cutting tool mounted in the machine tool is moved by the machine tool relative to a work piece, so that the cutting tool cuts away material from the work piece, e.g. to form one or more geometric features of the object to be manufactured. Dedicated software, such as Computer-aided manufacturing (CAM) software, is commonly used to analyze the CAD model and generate machining information, e.g. comprising a generic representation of a cutting tool movement path and/or activation/deactivation of machine tools functions. In other words, such dedicated software is used in deciding how to manufacture the object defined by the CAD model. In one example, the machining information may comprise a path along which a cutting tool should move and commands to activate/deactivate dispensing of cooling fluid.

Each machine tool has its unique hardware capabilities, configurations and requirements. For example, machine tools may differ in purpose, size, number of axes, spindle axis orientation, capability of moving several axes simultaneously, etc.

Further, each machine tool is controlled by a computer, i.e. a controller. A controller accepts numerical control codes, i.e. a set of instructions or a program, in a specific format or language. One example of such a language is G-code, which has many variants. When executing numerical control codes, the controller directs cutting tool motion and other machine tool activity, such as activating/deactivating dispensing of cooling fluid.

Each controller has its unique characteristics. For example, some controllers require that some or all instructions be given in a particular code, according to a particular format or language.

Accordingly, the machining information have to be adapted to suit the unique machine tool/controller combination in a data transformation and formatting process called post processing. Post processors are the software elements that are used during post processing to generate the output numerical control codes (NC codes) sequenced and formatted properly to be accepted and understood by the machine tool/controller of interest.

Normally, the post processor needs to be adapted to each individual machine tool, in order to be able to generate correctly sequenced and formatted output NC codes for the machine tool/controller of interest. In other words, a particular G-code dialect for the particular machine tool/controller is generated. In conventional solutions, the post processor is typically defined and/or adapted by a skilled technician with deep knowledge of both the particular controller and the particular machine tool. In one example, a machine tool operator may adapt or modify the machine code/G-code based on own knowledge and experience of the machine tool.

A drawback of such conventional solutions is that the skilled technician still needs to rely on experience as well as trial and error to actually reach a suitable post-processor. This typically involves repeatedly defining the post-processor and evaluating the resulting processed G-code in manufacturing simulations or in actual manufacturing operations, which is both cumbersome and time consuming.

A further drawback is that the post-processor may have to be adapted for each machine individually, as machine tool configuration and controller characteristics may differ for each machine tool.

It would be desirable to provide new ways to address one or more of the above mentioned issues.

### OBJECTS OF THE INVENTION

An objective of embodiments of the present invention is to provide a solution which mitigates or solves the drawbacks described above.

### SUMMARY OF THE INVENTION

The above objective is achieved by the subject matter described herein. Further advantageous implementation forms of the invention are described herein.

According to a first aspect of the invention the objects of the invention is achieved by a computer implemented method for generating numerical control codes for a controller of a machine tool configured to manufacture an object via subtractive manufacturing, the method comprising obtaining machining information, obtaining controller information, generating, based on the obtained controller information, post-processing means configured to process machining information into numerical control codes executable by said controller, and processing the obtained machining information, using said post processing means, into numerical control codes, which when executed by the controller causes the machine tool to perform machining represented by the obtained machining information and thereby manufacture the object via subtractive manufacturing.

According to an embodiment of the first aspect, the step of processing is performed immediately after the step of generating.

According to an embodiment of the first aspect, the method further comprises obtaining updated controller information and generating, based on the updated controller information, updated post-processing means.

According to an embodiment of the first aspect, the updated controller information comprises at least one of kinematic characteristics of the machine tool, dimensions of the machine tool, canned cycles of the machine tool, and numerical code capabilities of the machine tool.

According to an embodiment of the first aspect, the method further comprises processing the obtained machining information, using said updated post processing means for subsequent generation of numerical control codes.

According to an embodiment of the first aspect, the controller information is at least partially obtained by communicating directly with the controller.

According to an embodiment of the first aspect, the controller information is at least partially obtained by receiving the controller information via a user interface.

According to an embodiment of the first aspect, the controller information comprises at least one of kinematic characteristics of the machine tool, dimensions of the machine tool, canned cycles of the machine tool and numerical code capabilities of the machine tool.

According to an embodiment of the first aspect, at least a part of one or more previously generated post-processing means are stored as template post-processing means associated to the machine tool.

According to an embodiment of the first aspect, the step of generating and processing is performed after storing of the template post-processing means and immediately before manufacturing of the object.

According to an embodiment of the first aspect, wherein the step of generating the post-processing means comprises retrieving a template post-processing means, the template post-processing means not comprising a complete post-processing means, and generating the post-processing means by completing the retrieved post-processing means.

According to an embodiment of the first aspect, the template post-processing means is stored by any one of a server or cloud storage.

According to an embodiment of the first aspect, any one of the server or the cloud storage is external to the machine tool.

At least one advantage of this aspect is that the method helps the user of a machine to manufacture an object in a more efficient manner by taking into account the latest capabilities of the controller as well as capabilities of the same or similar controllers world-wide when generating the post-processing means. A further advantage of the present disclosure is that complexity of manufacturing the object as well as manufacturing time can be reduced by taking into account all the complexity reduction discovered by the same or similar controllers world-wide immediately before manufacturing the object.

According to a second aspect of the invention the objects of the invention is achieved by a computer program product comprising a computer-readable medium with instructions which, when executed by a computer, cause the computer to perform the method according to the first aspect.

According to a third aspect of the invention the objects of the invention is achieved by a server for generating numerical control codes for a controller of a machine tool configured to machine an object via subtractive manufacturing, the server comprising a computer-readable medium with instructions which, when executed by the server, cause the server to perform the method according to the first aspect.

According to a fourth aspect of the invention the objects of the invention is achieved by a system for machining an object via subtractive manufacturing, the system comprising server according to the third aspect, a controller of a machine tool configured to receive generated post processing means from the server and to machine an object via subtractive manufacturing using numerical control codes processed by the generated post processing means, a machine tool controlled by the controller.

In an embodiment of the fourth aspect, the server is configured to transmit the generated post processing means or the processed numerical control codes to a plurality of machine tools.

In an embodiment of the fourth aspect, the plurality of machine tools is located at different geographical locations.

It is noted that embodiments of the present disclosure relate to all possible combinations of features recited in the claims. The scope of the invention is defined by the claims, which are incorporated into this section by reference. A more complete understanding of embodiments of the invention will be afforded to those skilled in the art, as well as a realization of additional advantages thereof, by a consideration of the following detailed description of one or more embodiments. Reference will be made to the appended sheets of drawings that will first be described briefly.

### BRIEF DESCRIPTION OF THE DRAWINGS

**Fig. 1** shows a prior art solution for performing subtractive manufacturing
**Fig. 2** shows generation of numerical control codes according to one or more embodiments of the invention.
**Fig. 3** shows a system for machining an object via subtractive manufacturing according to one or more embodiments.
**Fig. 4** shows a system 300 for machining an object via subtractive manufacturing according to one or more embodiments.
**Fig. 5** shows a server 310 according to one or more embodiments of the present disclosure.
**Fig. 6** shows a flowchart of a method 600 according to one or more embodiments of the present disclosure.

A more complete understanding of embodiments of the invention will be afforded to those skilled in the art, as well as a realization of additional advantages thereof, by a consideration of the following detailed description of one or more embodiments. It should be appreciated that like reference numerals are used to identify like elements illustrated in one or more of the figures.

### DETAILED DESCRIPTION

In the present disclosure, the term "machining information", MI, denotes instructions for a machine tool that causes the machine tool to manufacture an object via subtractive manufacturing. In one example, the MI is indicative of machining operations, where one or more cutting tools moves relative to a work piece along a tool path for cutting away material from a work piece 130 to manufacture the object or geometric features of the object via subtractive manufacturing.

In the present disclosure, the term "post-processing means" or "post-processor" may be used interchangeably, and denotes any combination of hardware, software and/or encoded logic operable to provide functionality to convert machining information to instructions adapted to and executable by a controller of a machine tool.

In the present disclosure, the term "post-processor generator" denotes any combination of hardware, software and/or encoded logic operable to provide functionality to generate the post-processing means or a post-processor described in the section above.

In the present disclosure, the term "canned cycles" may be used interchangeably with the term "fixed cycle" and denotes sequences of numerical control codes for automating certain machining functions of the machine tool, such as drilling, boring, threading, pocketing, etc. A canned cycle typically stored as a pre-program of instructions or numerical control codes in the machine tool's controller and cannot be altered by the user.

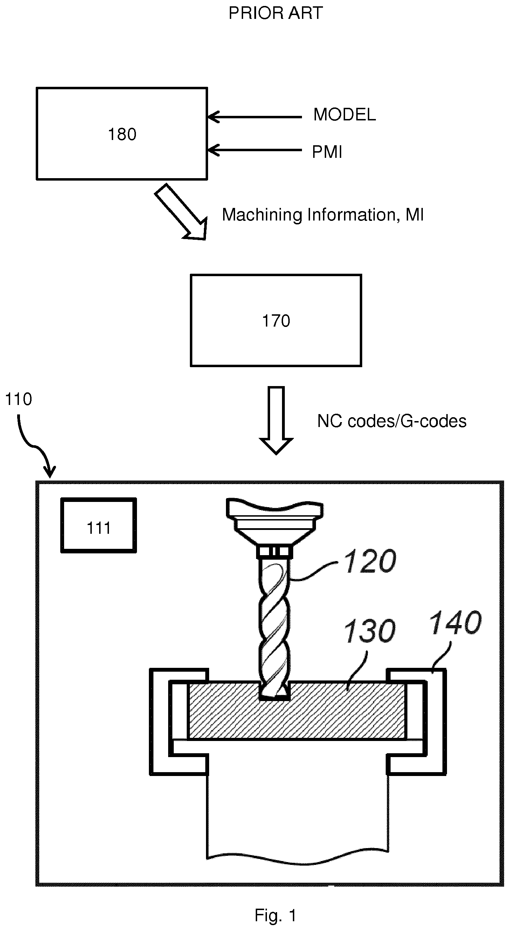

**Fig. 1** shows a prior art solution for performing subtractive manufacturing. One or more machine tools 110 are arranged for performing subtractive manufacturing. The machine tool 110 may for example be adapted for metal cutting. The machine tool 110 may be adapted to perform machining operations, for example metal cutting operations, such as drilling, milling, turning, reaming, or threading. The machining operations are typically performed using cutting tools 120.

A Computer-aided manufacturing, CAM, system 180, e.g. in the form of a stationary or laptop computer, a tablet computer or a smart phone, equipped with suitable software, may be configured to read or load a three-dimensional, 3D, model, MODEL, and product and manufacturing information, PMI, related to the 3D models. The MODEL and PMI may be retrieved from a memory, e.g. from a database. The 3D model may be a CAD model, for example in the form of a STEP file. The CAD model may include product and manufacturing information PMI. Alternatively, product and manufacturing information PMI may be provided separate from the CAD model. However, other formats could also be employed for the 3D model. The 3D model may be retrieved from a database of stored models, or may be provided by the user.

The CAM system 180 may further be configured to, based on the 3D model and/or the PMI, generate a set of instructions or a program, comprising a tool path, e.g. using cutter location data/CL-data, for causing the machine tool 110 to perform machining operations to manufacture the object according to the 3D model via subtractive manufacturing. Generation of such instructions or machine tool code or CNC code is a complicated task involving selection of for example operation sequences (for example in which order to perform different operation steps such as facing, hole making, and threading), machine tools 110, cutting tools 120, fixtures 140, tool paths and cutting data (such as feed rate, cutting speed, and depth of cut). One or more cutting tools 120 are available for use by the machine tool 110 to perform the machining operations, where the one or more cutting tools 120 moves relative to a work piece 130 along a tool path for cutting away material from the work piece 130 to manufacture an object or geometric features of the object via subtractive manufacturing. Examples of such cutting tools 120 include solid cutting tools formed in a single piece of material such as steel or cemented carbide. Further examples of such cutting tools 120 include cutting tools 120 consisting of multiple pieces fitted together to form the cutting tool. For example, such cutting tools 120 may comprise a tool body to which one or more replaceable cutting inserts (not shown) are mounted. The cutting inserts may for example comprise cemented carbide or ceramic material and may for example be provided with various coatings for meeting user requirements, whereas the tool body of such cutting tools may comprise steel. The work piece 130 may be made from a material, for example a metal material, known to the CAM system.

One or more fixtures 140 may be available for holding the work piece 130 in position during the machining or subtractive manufacturing.

The machine tools 110 may further be equipped with cooling systems (not shown) for providing cooling during machining. The cooling may for example be provided via activation/deactivation of a cooling fluid, e.g. controlled by commands in the executed G-code.

Each machine tool 110 is equipped with a controller 111 for controlling the machine tool 110. The controller 111 of the machine tool may for example control servos of the machine tool 110 for moving the cutting tool 120 relative to the work piece 130 based on the machining information and/or G-codes. In some machine tools 110, the controller 111 may cause both the cutting tool 120 and the work piece 130 to move. The machine tool 110 may for example be computer numerically controlled (CNC) machine tool 110, and the controller 111 may be adapted to execute G-code, CNC code or machine tool code.

An object to be manufactured may be defined by the 3D model, such as a three-dimensional CAD model. The model may be stored in a model database. Tolerances for the object regarding surface quality such as shape accuracy, geometric dimensions and/or surface finish may be specified via product and manufacturing information PMI. The PMI may also specify the material of the work piece 130 to be employed to manufacture the object.

For the machine tool 110 to be able to manufacture the object in accordance with the 3D model and the PMI, appropriate instructions, G-code or machine tool code needs to be generated for the controller 111 of the machine tool 110. In other words, the instructions, G-code or machine tool code needs to be translated, converted or adapted to the specific controller 111. Accordingly, the output from the CAM system 180 needs to be sequenced and formatted properly to be accepted and understood by the machine tool/controller 111.

This is typically performed by a post processor or post-processing means 170. The post processing means generate the output numerical control codes (NC codes) sequenced and formatted properly to be accepted and understood by the machine tool/controller. In the example illustrated in Fig. 1, the post-processing means is implemented as instructions or software being part of the CAM system 180. In a further example, the post-processing means may be implemented as add-on software or plug-in software for the CAM system 180. In another example, the post-processing means may be implemented as a separate or stand-alone software application.

Each machine tool has its unique capabilities, configurations and requirements and each controller has its unique characteristics. For the post processing means to be able to generate correctly sequenced and formatted output numerical control codes, such that the machine tool/controller of interest actually performs the manufacturing operations as desired, the post processing means need to be adapted to the unique machine tool and controller in question. Generation of a suitable post-processing means for the controller 111 normally requires detailed knowledge of the machine tool in question and the controller in question. Generation of a suitable post-processing means may still be cumbersome and time consuming, and usually involves plenty of trial and error, even for experienced users or skilled technicians or machine tool operators. Once the post-processor is generated, it will typically be used for a long time for all types of manufacturing by the machine tool 110.

The present disclosure aims to reduce the complexity and required time for manufacturing of an object by subtractive manufacturing by considering the latest available machining information and/or controller 111 characteristics when generating the post-processing means.

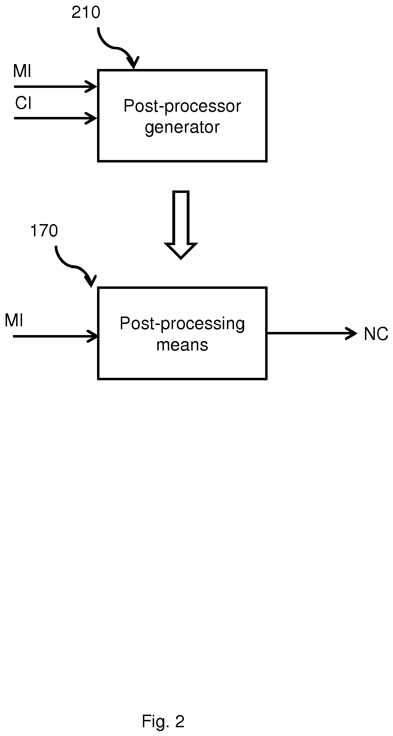

**Fig. 2** shows generation of numerical control codes according to one or more embodiments of the invention. In this embodiment, a system is provided that comprises a post-processor generator 210.

The post-processor generator 210 is configured to obtain controller information, CI.

The CI may be obtained by retrieving the CI from memory, e.g. the memory of a server 310 and/or the memory of the controller 111. Additionally or alternatively, the CI may be obtained by retrieving the CI from cloud storage 320. The CI may be received or retrieved directly from the server 310, the controller 111 or the cloud storage 320 or indirectly via one or more communications networks 330. The controller information CI may typically be indicative of e.g. kinematic characteristics of the machine tool 110, dimensions of the machine tool 110, canned cycles of the machine tool 110, and numerical code capabilities of the machine tool 110.

The post-processor generator 210 may further optionally be configured to obtain machining information, MI. The machining information, MI, may be obtained by retrieving the MI from memory, e.g. the memory of the server 310 or the controller 111. Additionally or alternatively, the machining information, MI, may be obtained by retrieving the MI from cloud storage 320. The server 310 or the cloud storage 320 may in some embodiments be external to the machine tool 110. The machining information, MI, may be received or retrieved directly from the server 310, the controller 111 or the cloud storage 320 or via one or more communications networks. The MI typically comprises a tool path and/or functional commands, e.g. indicative of a path that a cutting tool should follow and/or the activation/deactivation of cooling fluid provided to a work piece 130, e.g. the MI may include cutter location data in the form of CL-data.

The post-processor generator 210 is further configured to generate, based on the obtained CI and/or MI, post-processing means 170 configured to process machining information into numerical control codes NC executable by said controller 111. The generated post-processing means 170 is configured to obtain MI and to process the obtained MI into numerical control codes, NC, which when executed by the controller 111 causes the machine tool 110 to perform machining represented by the obtained machining information MI and thereby manufacture the object via subtractive manufacturing.

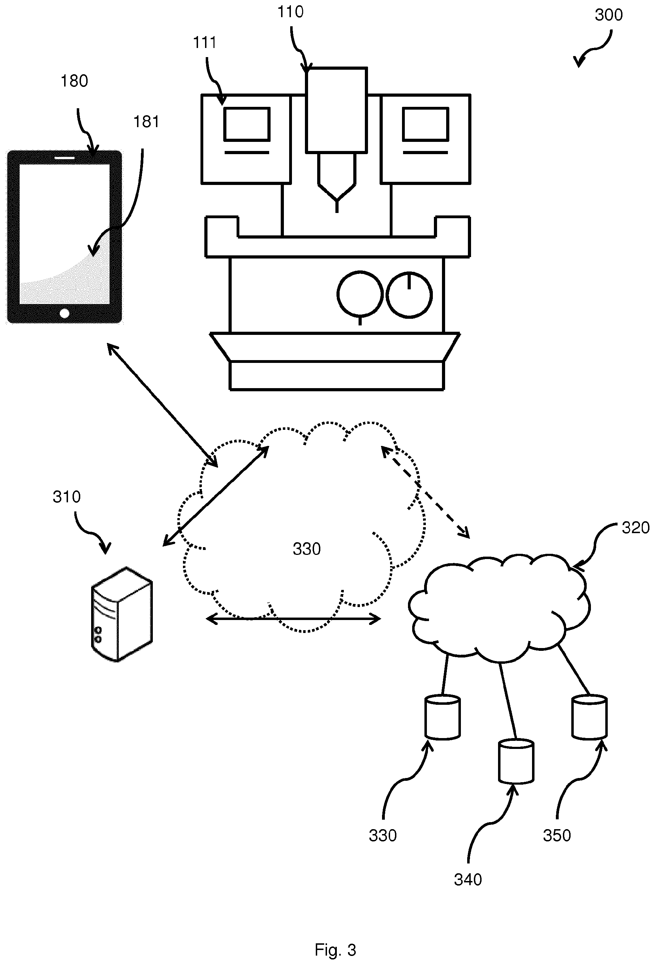

**Fig. 3** shows a system 300 for machining an object via subtractive manufacturing according to one or more embodiments. The system 300 comprises a CAM system 180, e.g. in the form of a tablet computer equipped with suitable software. The CAM system 180 is configured to obtain, read or load a 3D model, such as a CAD model in the form of a STEP file, and/or product and manufacturing information (PMI) related to the 3D model. Additionally or alternatively, the CAD model may include product and manufacturing information PMI. Additionally or alternatively, product and manufacturing information PMI may be provided separate from the CAD model.

However, it is understood that any other formats could also be employed for the 3D model. The 3D model may be retrieved via the network 330 from a database of stored models, or may be directly provided, e.g. provided based on input by a user of the CAM system 180.

The CAM system 180 may further be configured to, based on the 3D model and/or the PMI, generate machining information MI, i.e. a set of instructions or a program, comprising a tool path, e.g. using cutter location data/CL-data, for causing the machine tool 110 to perform machining operations to manufacture the object according to the 3D model via subtractive manufacturing. The CAM system 180 is typically equipped with a user interface 181 for user interaction. The user interface 181 may for example be a human machine interface (HMI). The HMI may for example include a touch screen 181 and one or more keys or buttons.

The system further comprises a machine tool 110 controlled by a controller 111. The machine tool may be any machine tool suitable for subtractive manufacturing, e.g. a computer numerically controlled (CNC) machine tool provided with various cutting tools, as further described in relation to Fig. 1.

The system further comprises a communications network 330, configured to exchange signals or control signals between nodes 111, 310, 320, 180 in the network.

Additionally or alternatively, the communications network communicate using wired or wireless communication techniques that may include at least one of a Local Area Network (LAN), Metropolitan Area Network (MAN), CAN bus, Global System for Mobile Network (GSM), Enhanced Data GSM Environment (EDGE), Universal Mobile Telecommunications System, Long term evolution, High Speed Downlink Packet Access (HSDPA), Wideband Code Division Multiple Access (W-CDMA), Code Division Multiple Access (CDMA), Time Division Multiple Access (TDMA), Bluetooth®, Zigbee®, Wi-Fi, Voice over Internet Protocol (VoIP), LTE Advanced, IEEE802.16m, WirelessMAN-Advanced, Evolved High-Speed Packet Access (HSPA+), 3GPP Long Term Evolution (LTE), Mobile WiMAX (IEEE 802.16e), Ultra Mobile Broadband (UMB) (formerly Evolution-Data Optimized (EV-DO) Rev. C), Fast Low-latency Access with Seamless Handoff Orthogonal Frequency Division Multiplexing (Flash-OFDM), High Capacity Spatial Division Multiple Access (iBurst®) and Mobile Broadband Wireless Access (MBWA) (IEEE 802.20) systems, High Performance Radio Metropolitan Area Network (HIPERMAN), Beam-Division Multiple Access (BDMA), World Interoperability for Microwave Access (Wi-MAX) and ultrasonic communication, etc., but is not limited thereto.

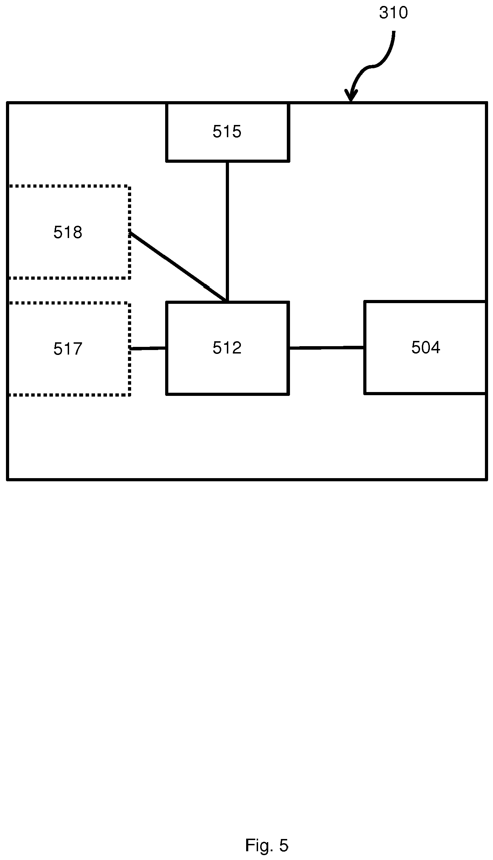

The system further comprises a server 310, which is further described in relation to Fig. 5.

The system further optionally comprises a cloud storage 320 configured to store or retrieve data to/from one or more physical or virtual storage devices 330-350. The cloud storage 320 is further configured to receive data to be stored. The data is typically comprised in control signals, e.g. received directly from a node or over the communications network 330. The cloud storage 320 is further configured to send retrieved data in control signals, e.g. send data directly to a node 310, 111, 180 or over the communications network 330. The storage devices 330-350 may comprise at least one of a hard disk drive, a hard Random Access Memory RAM, a flash drive, a disk drive, a floppy disk drive, a magnetic tape drive, an optical disk drive, a CD or DVD drive (R or RW), or other removable or fixed media drive.

In one example, the post-processor generator 210 is implemented as software executed by the server 310, and the post-processing means 170 is also implemented as software or instructions executed by the server 310. The server 310 retrieves the controller information, CI, and/or the machining information, MI, from the controller 111 and/or from the cloud storage 320 and/or from memory of the server 310. The CI/MI is typically comprised in control signals that are typically exchanged over the communications network 330.

In this way, the currently actual capabilities of the local controller and new capabilities discovered by the same or similar controllers world-wide can be considered. The controller 111 may e.g. be updated with additional canned cycles or other new functions, such as network communication capabilities, that can be taken into account when generating the post-processing means 170. The server 310 further retrieves the machining information, MI, from the CAM system 180 and/or from the cloud storage 320 and/or via user input. The machining information MI is typically obtained via the communications network 330.

The disclosure has the advantage that by considering current data CI/MI, e.g. the desired tool path, the controller tool command capabilities, new capabilities and the numerical code dialect of the controller, the post-processing means 170 can be generated in a more optimal way. Further, the disclosure has the advantage that by considering the obtained controller information CI, the post-processing means 170 can be generated for many different types of controllers 111. In other words, the disclosure provides a universal way of generating the post-processing means 170.

Thus, the post-processing means 170, when executed on the server 310, processes machining information into numerical control codes (NC), which are executable by the controller 111 of the machine tool 110. These numerical control codes (NC), which are output from the post processing means 170, are typically sent over the communications network 330 to the controller 111, in order to be executed by the controller and thereby manufacture the object via subtractive manufacturing.

In practice, when a user of the CAM system 180 has completed the work in deciding how to manufacture the object defined by the 3D model, user instructions are input via the HMI 181 that are indicative of generating output machining information, i.e. in order to generate G-code. Until this very moment, the post-processing means 170 have not yet been created. Rather, the server 310 has, by virtue of its post-processor generator 210, the capability to create suitable post-processing means 170 based on the obtained machining information MI and/or the obtained controller information CI.

In other words, the post-processing means 170 is generated and used to process/translate the MI to particular numerical control codes NC that the particular controller 111 is capable of processing. The particular processed/translated numerical control codes NC are then typically transmitted to the controller 111 via the communications network 330. Additionally or alternatively, the particular processed/translated numerical control codes NC may be sent to a user, e.g. via e-mail, thereby allowing the user to transfer the particular processed/translated numerical control codes NC to a particular machine tool, e.g. using a portable memory such as a thumb drive.

Particularly important to the present disclosure, the generated post-processing means 170 is not stored for future use, but exists only for a particular session of manufacturing. Part of the generated post-processing means 170 may however be stored as a template post-processing means. This approach, of the disclosure, is very much different from conventional solutions, where a single post-processing means is generated for use in the foreseeable future, regardless of when the single post-processing means is used. Such a conventional static/single post-processing means is implemented once and used time after another.

Also important to the present disclosure, is that typically the generation of the post-processing means 170 and the subsequent processing of machining information MI, using the generated post processing means 170, into numerical control codes NC are performed instantly after each other, with exception for any delay in obtaining, processing or transmitting/transferring data. Such delay may e.g. be caused by a high number of users in the generation/processing system and/or the current load of the generation/processing system. In a typical example, the total time required for generation of the post-processing means 170 and the subsequent processing of machining information MI into numerical control codes NC is in the range of 10-30 seconds.

In an alternative embodiment, the generation of the post-processing means 170 is performed by the server 310. The server 310 then transfers/transmits the generated post-processing means 170 to the controller 111 and/or any other computer system communicatively coupled to the machine tool 110. The controller 111 and/or the other computer system communicatively coupled to the machine tool 110 then processes the machining information MI, using the transferred/transmitted post processing means 170, into numerical control codes NC.

In this embodiment, the post-processor generator 210 is comprised in the server 310 and the post-processing means 170 are comprised in the controller 111. The server 310 is further configured to transmit the generated post-processing means 170 to the controller 111. This may e.g. be performed by transmitting a wired or wireless control signal, comprising or indicative of, the post-processing means 170.

In one example illustrating the above embodiment, the post-processor generator 210 is implemented as software executed by the server 310 and the post-processing means 170 is implemented as software or instructions executed by the controller 111. The server 310 retrieves the controller information, CI, from the controller 111 and from the cloud storage 320. In this way, the currently actual capabilities of the local controller and new capabilities discovered by the same or similar controllers world-wide can be considered. The server 310 optionally further retrieves the machining information, MI, from the cloud storage 320. By considering e.g. the desired tool path, the controller tool command capabilities, new capabilities and the numerical code dialect of the controller, the post-processing means 170 can be generated.

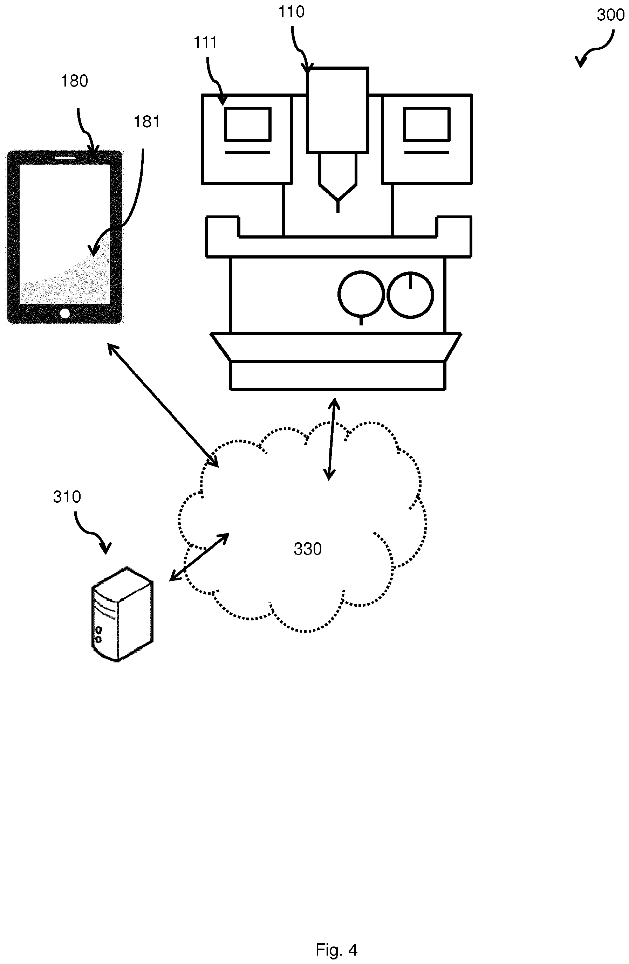

**Fig. 4** shows a system 300 for machining an object via subtractive manufacturing according to one or more embodiments. This embodiment of the system 300 represents a stand-alone configuration of the present disclosure.

The system 300 may optionally comprise a CAM system 180, as further described in relation to Fig. 3.

The system further comprises a machine tool 110 controlled by a controller 111, as further described in relation to Fig. 3.

The system may optionally further comprise a server 310, which is further described in relation to Fig. 5.

In a first embodiment of a stand-alone configuration, the post-processor generator 210 is implemented as software executed by the controller 111, and the post-processing means 170 is also implemented as software or instructions executed by the controller 111. The controller 111 retrieves the controller information, CI, and/or the machining information, MI, from memory of the controller 111.

In a second embodiment of a stand-alone configuration, the post-processor generator 210 is implemented as software executed by the server 310, and the post-processing means 170 is also implemented as software or instructions executed by the server 310. The server 310 retrieves the controller information, CI, and/or the machining information, MI, from the controller 111 and/or from the CAM system 180 and/or from memory of the server 310. The CI/MI is typically comprised in control signals that are typically exchanged over the communications network 330.

In an alternative third embodiment of a stand-alone configuration, the generation of the post-processing means 170 is performed by the server 310. The server 310 then transfers/transmits the generated post-processing means 170 to the controller 111 and/or any other computer system communicatively coupled to the machine tool 110. This may e.g. be performed by transmitting a wired or wireless control signal, comprising or indicative of, the post-processing means 170. The controller 111 and/or the other computer system communicatively coupled to the machine tool 110 then processes the machining information MI, using the transferred/transmitted post processing means 170, into numerical control codes NC.

In this third embodiment of a stand-alone configuration, the post-processor generator 210 is implemented as software executed by the server 310, and the post-processing means 170 is implemented as software or instructions executed by the controller 111. The server 310 retrieves the controller information, CI, and/or the machining information, MI, from the controller 111 and/or from the CAM system 180 and/or from memory of the server 310. The CI/MI is typically comprised in control signals that are typically exchanged over the communications network 330.

In this way, the currently actual capabilities of the local controller can be considered. The controller 111 may e.g. be updated with additional canned cycles or other new functions, such as network communication capabilities, that can be taken into account when generating the post-processing means 170. The server 310 further retrieves the machining information, MI, from the CAM system 180 and/or from memory of the server 310 and/or via user input. The CI/MI may be obtained via the communications network 330.

The disclosure has the advantage that by considering current data CI/MI, e.g. the desired tool path, the controller tool command capabilities, new capabilities and the numerical code dialect of the controller, the post-processing means 170 can be generated in a more optimal way.

**Fig. 5** shows a server 310 according to one or more embodiments of the present disclosure.

The server 310 may be in the form of any one of one or more interacting servers, one or more virtual servers, an on-board computer, a digital information display, a stationary computing device, a laptop computer, a tablet computer, a handheld computer, a wrist-worn computer, a smart watch, a PDA, a Smartphone, a smart TV, a telephone or a media player.

The server 310 may comprise processing circuitry 512 optionally communicatively coupled to a transceiver 504 for wired and/or wireless communication. Further, the server 310 may further comprise at least one optional antenna (not shown in figure). The antenna may be coupled to the transceiver 504 and is configured to transmit and/or emit and/or receive a wired/wireless signal in a wireless communication system, e.g. send/receive control signals between the server 310, the controller 111 and the cloud storage. In one example, the processing circuitry 512 may be any of a selection of processor and/or a central processing unit and/or processor modules and/or multiple processors configured to cooperate with each-other.

Further, the server 310 may further comprise a memory 515. The memory 515 may contain instructions executable by the processing circuitry to perform any of the methods and/or method steps described herein.

The server 310 may further comprise a communications interface, e.g. the wireless transceiver 504 and/or a wired/wireless communications network adapter, which is configured to send and/or receive data values or parameters as a signal or control signal to or from the processing circuitry 512 to or from other external nodes, e.g. a controller 111 and/or other servers. In an embodiment, the communications interface communicates directly between communication network nodes or via the communications network.

In one or more embodiments the server 310 may further comprise an input device 517, configured to receive input or indications from a user and send a user-input signal indicative of the user input or indications to the processing circuitry 512.

In one or more embodiments the server 310 may further comprise a display 518 configured to receive a display signal indicative of rendered objects, such as text or graphical user input objects, from the processing circuitry 512 and to display the received signal as objects, such as text or graphical user input objects.

In one embodiment the display 518 is integrated with the user input device 517 and is configured to receive a display signal indicative of rendered objects, such as text or graphical user input objects, from the processing circuitry 512 and to display the received signal as objects, such as text or graphical user input objects, and/or configured to receive input or indications from a user and send a user-input signal indicative of the user input or indications to the processing circuitry 512. In embodiments, the processing circuitry 512 is communicatively coupled to the memory 515 and/or the communications interface 504 and/or the input device 517 and/or the display 518. The server 310 may be configured to send/receive data directly from another node or to send/receive data via the wired and/or wireless communications network 330.

In embodiments, the communications interface and/or transceiver 504 communicates using wired and/or wireless communication techniques.

In embodiments, the one or more memory 515 may comprise a selection of memories such as a hard RAM, disk drive, a floppy disk drive, a magnetic tape drive, an optical disk drive, a CD or DVD drive (R or RW), or other removable or fixed media drive.

In a further embodiment, the server 310 may further comprise and/or be coupled to one or more additional sensors (not shown) configured to receive and/or obtain and/or measure physical properties pertaining to the machine tool 110 and send one or more sensor signals indicative of the physical properties to the processing circuitry 512, e.g. sensor data indicative of a location of a cutting tool.

The controller 111 may comprise all or a subset of features of the server 310 described in relation to Fig. 5.

The CAM, system 180 may comprise all or a subset of features of the server 310 described in relation to Fig. 5.

The cloud storage 320 may comprise all or a subset of features of the server 310 described in relation to Fig. 5.

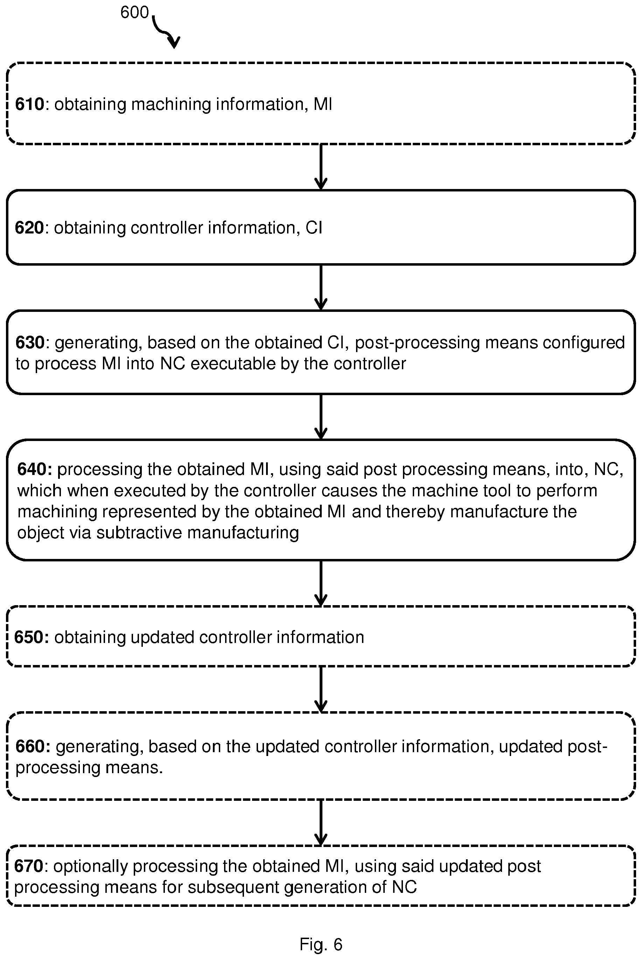

**Fig. 6** shows a flowchart of a method 600 according to one or more embodiments of the present disclosure. A computer implemented method 600 is provided, for generating numerical control codes for a controller 111 of a machine tool 110. The controller 111 is configured to control the machine tool 110 to manufacture an object via subtractive manufacturing. The method comprises:
**STEP 610:** optionally obtaining machining information MI. Obtaining MI is further described in relation to Fig. 2.
**STEP 620:** obtaining controller information CI. Obtaining CI is further described in relation to Fig. 2. The CI may be obtained from one or more of the server 310, the cloud storage 320, the controller 111 and a user interface, e.g. of either the server 310 or the controller 111.

In one embodiment, obtaining CI comprises obtaining a first part of the CI indicative of at least a part of one or more previously generated post-processing means, e.g. stored as template post-processing means associated to the machine tool 110 at the cloud storage 320. Obtaining CI further comprises obtaining a second part of the CI from the controller 111 and/or from a user interface comprised in the server 310 or the controller 111. The post-processing means 170 is later generated based on the first and second part of CI. E.g. by completing a template post-processing means with information received directly from the controller and/or information received via the user interface.

In one example, this may e.g. involve receiving a first part of CI indicative of template post-processing means which are indicative of command capabilities, tool path reduction capabilities and NC capabilities. Further a second part of CI is received from the controller 111 and/or user interface specifying physical measurements of the machine tool 110. The post-processing means 170 can then be generated by completing the first part of the controller information with the second part of the controller information.

The CI may e.g. comprise at least one of kinematic characteristics of the machine tool 110, dimensions of the machine tool 110, canned cycles of the machine tool 110, and numerical code capabilities of the machine tool 110.

**Step 630:** generating, based on the obtained controller information CI, post-processing means 170 configured to process machining information MI into numerical control codes NC executable by the controller 111. In embodiments, the post-processing means 170 may further be generated based on the MI. In embodiments, generating post-processing means 170 comprises providing functionality including at least one of:
translating commands indicated by the MI into an NC dialect of the controller 111 and/or associated machine tool. E.g. commands indicative of activation/deactivation of cooling fluid to the work piece 130.
Reducing complexity of a tool path indicated by the MI. E.g. by translating multiple movement commands to a predetermined shape command, such as a line or an arc.

In embodiments, at least a part of the generated post-processing means 170 and/or one or more previously generated post-processing means 170 are stored as template post-processing means associated to the machine tool 110, e.g. in the cloud storage 320 and/or the memory of the server and/or the memory of the controller 111.

Additionally or alternatively, the step of generating 630 and processing 640 is performed after storing of the template post-processing means and immediately before manufacturing of the object. Additionally or alternatively, the step of generating 630 the post-processing means further comprises retrieving one or more template post-processing means, the template post-processing means not comprising a complete post-processing means and generating the post-processing means is further performed by completing the retrieved post-processing means. Additionally or alternatively, the template post-processing means is stored in any of a memory of the server 310 and/or the cloud storage 320. Additionally or alternatively, the server 310 and/or the cloud storage 320 are external to the machine tool 110.

**Step 640:** processing the obtained MI, using said post processing means 170, into numerical control codes, NC, which when executed by the controller causes the machine tool 110 to perform machining represented by the obtained MI and thereby manufacture the object via subtractive manufacturing. Step 640 may be performed by the server 310 or the controller 111.

In one embodiment, the step of processing 640 is performed immediately after the step of generating 630. In this context, the term immediately after should be interpreted as initiating the step of processing 640 within 30 seconds of completing the step of generating 630.

In a typical example, the NC are processed and scheduled for loading into a particular machine tool as soon as that machine tool becomes available for subtractive manufacturing of the object.

In a second example, the NC are processed and immediately loaded into the machine tool 110 for immediate manufacturing of the object.

In embodiments, the step of generating 630 and/or processing 640 is performed immediately before manufacturing of the object.

An advantage of the present disclosure is that the method helps the user to machine an object in a more efficient manner by taking into account the latest capabilities of the controller as well as capabilities of the same or similar controllers world-wide when generating the post-processing means 170.

A further advantage of the present disclosure is that complexity of manufacturing the object as well as manufacturing time can be reduced by taking into account all the complexity reduction discovered by the same or similar controllers world-wide.

Typically, manufacturing involves manufacturing multiple copies of the object in a product series. New capabilities and/or complexity reductions may be discovered during manufacturing of the product series. In one embodiment of the present disclosure, this is accounted for by generating updated post-processing means during production of the product series.

Additionally or alternatively, the method described above further comprises:
**Step 650:** optionally obtaining updated controller information. The updated controller information may be obtained in a similar manner to what is described in relation to Step 620. The updated CI comprises at least one of kinematic characteristics of the machine tool 110, dimensions of the machine tool 110, canned cycles of the machine tool 110 and numerical code capabilities of the machine tool 110.
**Step 660:** optionally generating, based on the updated controller information, updated post-processing means.

Additionally or alternatively, the method described above further comprises:
**Step 670:** optionally processing the obtained MI, using said updated post processing means for subsequent generation of numerical control codes NC.

Additionally or alternatively, the CI is at least partially obtained by communicating directly with the controller 111.

Additionally or alternatively, the CI is at least partially obtained by receiving the controller information CI via a user interface.

Additionally or alternatively, the CI is at least partially obtained by communicating directly with the cloud storage 320.

In one embodiment, a computer program product is provided and comprises a computer-readable medium with instructions which, when executed by a computer, cause the computer to perform the method described herein.

Additionally, variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

The computer program described herein may for example be provided in a computer program product. In other words, a computer program product may comprise a computer-readable medium with instructions which, when the instructions are executed by a computer (or by a processor comprised in the computer), cause the computer to perform the method of any one of the embodiments of the first aspect. The computer-readable medium may for example be a transitory computer-readable medium (such as a signal or wave carrying the instructions from a transmitter to a receiver) or a non-transitory computer-readable medium (such as a storage medium or memory on which the instructions are stored). Further examples of transitory computer-readable media include an electronic signal, an optical signal, and a radio signal.

It will be appreciated that a processor (or processing circuitry) may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide computer functionality, either alone or in conjunction with other computer components (such as a memory or storage medium).

It will also be appreciated that a memory or storage medium (or a computer-readable medium) may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by a processor or processing circuitry.

Finally, it should be understood that the invention is not limited to the embodiments described above, but also relates to and incorporates all embodiments within the scope of the appended independent claims.

## Claims

1. A computer implemented method for generating numerical control codes for a controller (111) of a machine tool (110) configured to manufacture an object via subtractive manufacturing, the method comprising:
Obtaining (610) machining information (MI),
Obtaining (620) controller information (CI),
Generating (630), based on the obtained controller information, post-processing means (170) configured to process machining information into numerical control codes (NC) executable by said controller, and
Processing (640) the obtained machining information (MI), using said post processing means (170), into numerical control codes (NC), which when executed by the controller causes the machine tool (110) to perform machining represented by the obtained machining information (MI) and thereby manufacture the object via subtractive manufacturing.

2. The method according to claim 1, wherein the step of processing (640) is performed immediately after the step of generating (630).

3. The method according to any of the preceding claims, wherein the method further comprises:
Obtaining (650) updated controller information,
Generating (660), based on the updated controller information, updated post-processing means.

4. The method according to claim 3, wherein the updated controller information (CI) comprises at least one of:
kinematic characteristics of the machine tool (110),
dimensions of the machine tool (110),
canned cycles of the machine tool (110), and
numerical code capabilities of the machine tool (110).

5. The method according to claim 3 or 4, further comprising:
Processing (670) the obtained machining information (MI), using said updated post processing means for subsequent generation of numerical control codes (NC).

6. The method according to any of the preceding claims, wherein the controller information (CI) is at least partially obtained by communicating directly with the controller (111).

7. The method according to any of the preceding claims, wherein the controller information (CI) is at least partially obtained by receiving the controller information (CI) via a user interface.

8. The method according to any of the preceding claims, wherein the controller information (CI) comprises at least one of kinematic characteristics of the machine tool (110), dimensions of the machine tool (110), canned cycles of the machine tool (110) and numerical code capabilities of the machine tool (110).

9. The method according to any of the preceding claims, wherein at least a part of one or more previously generated post-processing means are stored as template post-processing means associated to the machine tool (110).

10. The method according to claim 9, wherein the step of generating (630) and processing (640) is performed after storing of the template post-processing means and immediately before manufacturing of the object.

11. The method according to claim 10, wherein the step of generating (630) the post-processing means comprises:
retrieving a template post-processing means, the template post-processing means not comprising a complete post-processing means,
generating the post-processing means by completing the retrieved post-processing means.

12. The method according to any of claims 9-11, wherein the template post-processing means is stored in any of a server (310) or a cloud storage (320).

13. The method according to claim 12, wherein any one of the server (310) or the cloud storage (320) is external to the machine tool (110).

14. A computer program product comprising a computer-readable medium with instructions which, when executed by a computer, cause the computer to perform the method of any one of claims 1-13.

15. A server for generating numerical control codes for a controller (111) of a machine tool (110), the machine tool (110) being configured to machine an object via subtractive manufacturing, the server comprising a computer-readable medium with instructions which, when executed by the server, cause the server to perform the method of any one of claims 1-13.

16. A system (300) for machining an object via subtractive manufacturing, the system comprising:
a server (310) according to claim 15,
a controller (111) of a machine tool (110) configured to machine an object via subtractive manufacturing using numerical control codes (NC) processed by the generated post processing means (170),
a machine tool (110) controlled by the controller (111).

17. The system (300) according to claim 16, wherein the server (310) is configured to transmit the generated post processing means (170) to a plurality of machine tools.

18. The system (300) according to claim 17, wherein the plurality of machine tools are located at different geographical locations.
